# EUROPEAN PATENT SPECIFICATION

(11) **EP 2 620 997 B1**
(45) Date of publication and mention of the grant of the patent: **16.09.2015**
(21) Application number: 13152393.8
(22) Date of filing: 23.01.2013
(51) Int. Cl.: H01M 2/10, B60L 11/18, H01M 10/613, H01M 10/625, H01M 10/6561

(54) **Pouring structure for battery pack**
Gießstruktur für Batteriepacks
Structure de versement pour bloc-batterie

(30) Priority: 24.01.2012 JP 2012011996
(43) Date of publication of application: 31.07.2013
(73) Proprietor: Mitsubishi Jidosha Kogyo K.K., Tokyo 108-8410 (JP); Mitsubishi Jidosha Engineering K.K., Aichi 444-8501 (JP)
(72) Inventor: Imamura, Isahiro, Tokyo, Tokyo 108-8410 (JP); Yakata, Takashi, Tokyo, Tokyo 108-8410 (JP); Kawai, Toshihiko, Okazaki-shi, Aichi (JP)
(74) Representative: Vossius & Partner Patentanwälte Rechtsanwälte mbB

(56) References cited:
- EP-A1- 2 080 657
- WO-A1-2011/023875
- US-A1- 2011 089 724

## Description

### BACKGROUND OF THE INVENTION

### Field of the Invention

The present invention relates to pouring structures for battery packs, and more particularly, to a structure that facilitates the pouring of water or the like.

### Description of the Related Art

An electric vehicle is mounted with a battery pack for storing electric power and supplying an electric motor with the electric power. The battery pack is arranged under the floor of either a vehicle compartment or luggage compartment of the electric vehicle so that required capacity may be secured for the luggage compartment or the vehicle compartment. Also, the battery pack has an intake port for admitting cool air for cooling the battery pack heated during charging or discharging, and a discharge port for discharging the air heated by the battery pack to thereby release heat to the outside.

In the device disclosed in a patent publication (Japanese Laid-open Patent Publication No. 2011-198575), the intake port of a battery pack is connected with an intake duct for introducing air into the battery pack from within the vehicle compartment. The intake duct is fixed to the vehicle body as well as to the battery pack by clips. Another method of fixing the intake duct to the vehicle body or to the battery pack is to use fixing bolts along with a bracket or the like.

Meanwhile, in case an electric vehicle is put in an emergency situation, water, fire extinguishing agent or the like needs to be poured into the battery pack, in order to dilute the electrolytic solution in the battery pack or to lower the temperature of the battery pack.

Where the intake duct is fixed by the methods explained above with reference to the patent publication, however, the clips or bolts need to be removed with use of a tool or the like to detach the intake duct when water or the like is to be poured in emergency situations.

Thus, the detachment of the intake duct takes extra time, so that considerable time is required to pour water or the like into the battery pack, which is not desirable in case of emergency.

Document EP 2 080 657 A1 discloses an electric vehicle which can cool a power unit by cold airstreams without causing dew drops and a temperature rise in a vehicle interior. The electric vehicle travels by operating a motor and includes a duct having one end joined to an air conditioning unit and the other end joined to the power unit and serving as an airstream flow path via which cold airstreams are guided from the air conditioning unit to the power unit. The duct is shaped in accordance with a shape of a vehicle interior near a front passenger's seat, and being positioned under a floor at the front passenger's seat.

Document US 2011/0089724 A1 relates to an arrangement structure for a duct. The arrangement structure includes a vehicle seat with a seatback and a lock mechanism provided on the seatback and engaging with a striker supported on a vehicle sidewall to lock the seatback at a standing position; and the duct provided on the side of the seatback, extending in the up and down direction and flowing air.

### SUMMARY OF THE INVENTION

An object of the present invention is therefore to provide a pouring structure for a battery pack, which structure permits water or fire extinguishing agent to be easily poured into the battery back in emergency situations.

To achieve the object, the present invention provides a pouring structure for a battery pack, comprising:
an inlet port provided in a battery pack which supplies electric power to an electric motor for driving an electric vehicle, the inlet port allowing water or fire extinguishing agent to be poured into the battery pack;
a closure member closing the inlet port; and
a bracket configured to cover and fix the closure member and having a mounting portion formed so as to be partly open,
wherein the closure member is securely connected to the inlet port with use of the bracket by inserting a fastening member into the mounting portion and fastening the bracket to either a vehicle body or the battery pack,
the inlet portion is an intake port through which air is introduced into the battery pack,
the closure member is constituted by an intake duct connecting the intake port and an interior of a vehicle compartment with each other, and a duct fixing member securely connecting the intake duct to the intake port, and
the bracket is configured such that a space is provided between the duct fixing member and each side wall of the bracket.

In this manner, the fastening member is inserted into the mounting portion which is so formed as to be partly open, and the fixing member, which is a bracket, is fastened to either the vehicle body or the battery pack, to securely connect the closure member to the intake port with use of the fixing member.

Since the mounting portion into which the fastening member such as a bolt is inserted is formed so as to be partly open, the fixing member and the closure member can be detached by deforming the fixing member and thereby pulling out the mounting portion of the fixing member from the fastening member.

The fixing member and the closure member can therefore be detached without the need to use a tool or the like, so that in case of emergency, water or fire extinguishing agent can be readily poured into the battery pack.

Preferably, the mounting portion of the fixing member is formed at each of opposite ends of the fixing member.

Where the mounting portion is thus formed at each end of the fixing member, the fixing member can be detached at the mounting portions formed at both ends thereof from the vehicle body or the battery pack, whereby the fixing member and the closure member can be detached with ease.

The inlet port is an intake port through which air is introduced into the battery pack, and the closure member is constituted by an intake duct connecting the intake port and an interior of a vehicle compartment with each other, and a duct fixing member securely connecting the intake duct to the intake port.

Thus, the intake port is used as the inlet port, and the closure member is constituted by the intake duct connecting the intake port and the interior of the vehicle compartment with each other and the duct fixing member securely connecting the intake duct to the intake port. Since it is unnecessary to additionally form a separate inlet port or to use a separate closure member, increase in cost can be restrained.

Further, the fixing member, which is a bracket, is configured such that a space is provided between the fixing member and the closure member.

Since a space is provided between the closure member and the fixing member, the fixing member can be easily deformed in the space, so that the fixing member can be more readily detached from the vehicle body or the battery pack. According to a preferred additional or alternative aspect, there is provided an intake duct cover 40 that has bolt inserting portions 44 formed by making generally V-shaped cuts in the respective ends of a bracket section 42. Bolts 50 are inserted into the respective bolt inserting portions 44 of the intake duct cover 40 and screwed into respective nuts 16 of mounting brackets 15 welded to a floor panel 11, to fix the intake duct cover 40 to the floor panel 11 and thereby fix an intake duct 30 to the floor panel 11.

### BRIEF DESCRIPTION OF THE DRAWINGS

The present invention will become more fully understood from the detailed description given hereinafter and the accompanying drawings which are given by way of illustration only, and thus, are not limitative of the present invention, and wherein:
FIG. 1 is a perspective view of a front section of a vehicle compartment of a vehicle to which a pouring structure for a battery pack according to the present invention is applied;
FIG. 2 is an enlarged view of part A shown in FIG. 1;
FIG. 3 is a sectional view taken along line B-B in FIG. 2;
FIG. 4 is a sectional view taken along line C-C in FIG. 2; and
FIG. 5 is a perspective view of an intake duct cover.

### DETAILED DESCRIPTION OF THE INVENTION

An embodiment of the present invention will be described below with reference to the accompanying drawings.

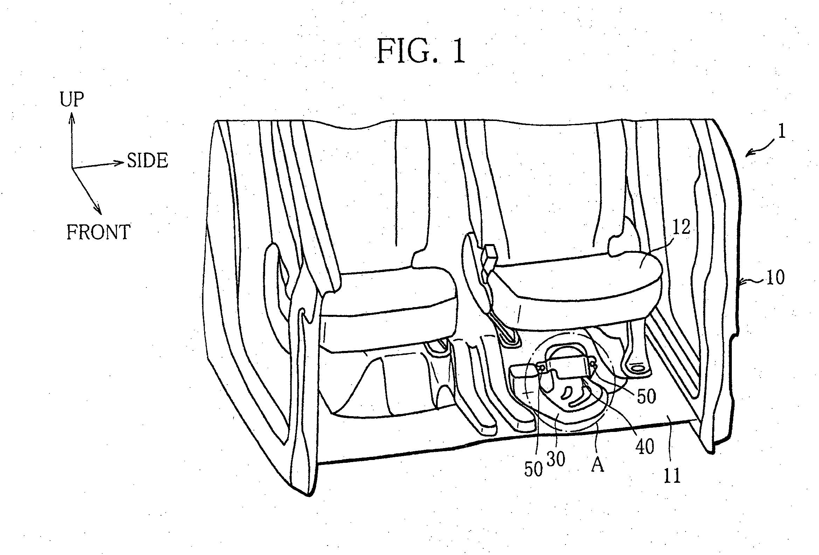

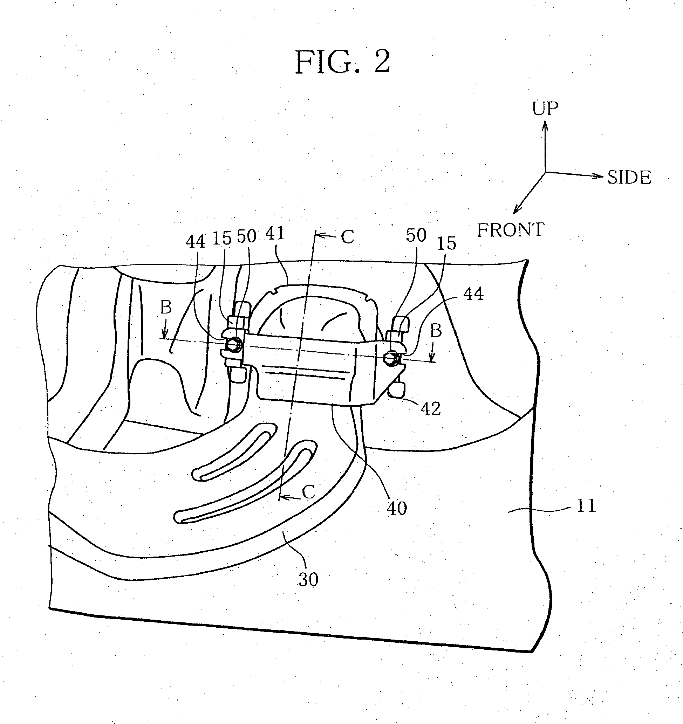

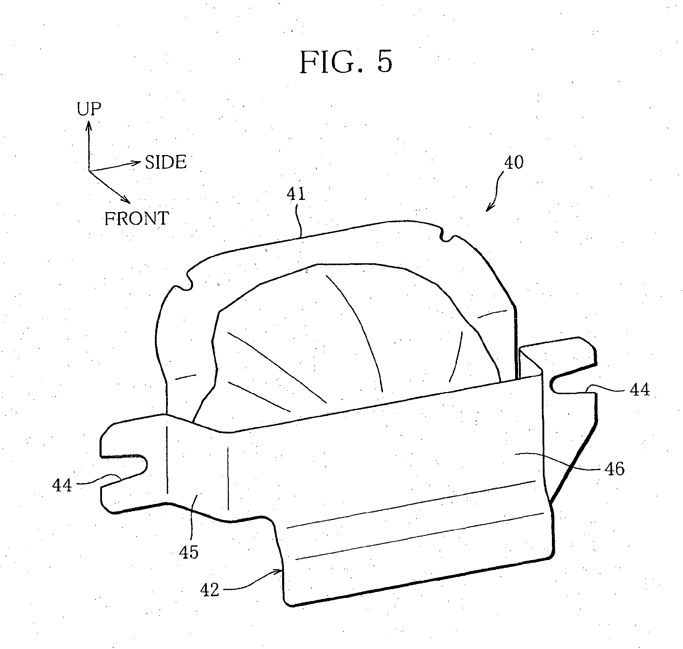

FIG. 1 is a perspective view of a front section of a vehicle compartment of a vehicle to which a pouring structure for a battery pack according to the present invention is applied, FIG. 2 is an enlarged view of part A shown in FIG. 1, FIGS. 3 and 4 are sectional views taken along lines B-B and C-C, respectively, shown in FIG. 2, and FIG. 5 is a perspective view of an intake duct cover. In these figures, arrow "FRONT" indicates a forward direction of a vehicle body, arrow "SIDE" indicates a width direction of the vehicle body, and arrow "UP" indicates an upward direction of the vehicle body.

The vehicle 1 to which the pouring structure for a battery pack according to the present invention is applied is an electric vehicle equipped with a traction motor (electric motor) as a traveling device of the vehicle 1. The traction motor is supplied with high-voltage electric power from a battery pack 20 via a high-voltage circuit, and the operation of the traction motor is controlled by an inverter. The battery pack 20 has a charging inlet lid to which an outlet cable extended from an external power supply is connected so that the battery pack 20 can be charged by a battery charger.

The battery pack 20 comprises a secondary battery such as a lithium-ion secondary battery. Specifically, the battery pack 20 includes a plurality of battery modules each constituted by a plurality of battery cells and provided with a cell monitoring unit for monitoring the battery cells, and a battery monitoring unit for monitoring the temperatures, states of charge, and the like of the battery modules on the basis of the outputs from the cell monitoring units. The battery modules and the battery monitoring unit are contained in a housing 21 of resin to form a unit.

As illustrated in FIGS. 1 and 2, seats 12 are placed on a floor panel 11 forming a lower part of the vehicle body 10 of the vehicle 1. An intake duct 30, which is made of resin and is used to introduce air in the vehicle compartment into the battery pack 20, is arranged under a seat 12 and fixed to the floor panel 11 by bolts 50 with use of an intake duct cover 40.

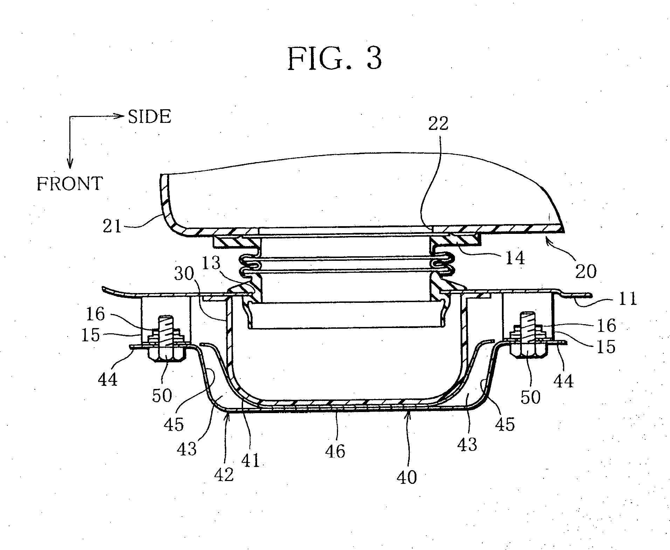

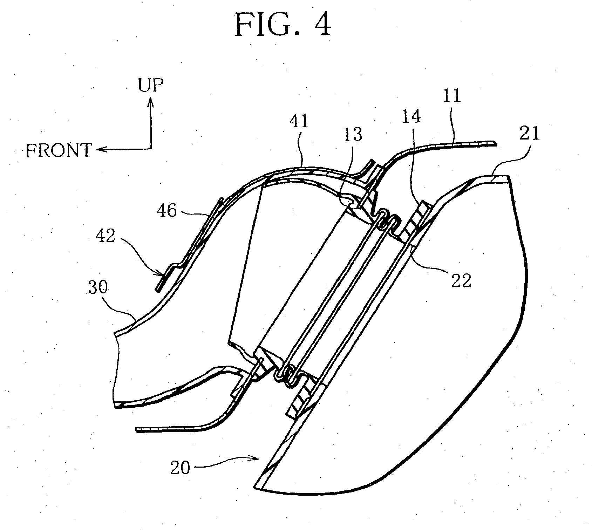

Also, as shown in FIGS. 3 and 4, the battery pack 20 is arranged under the floor panel 11 and has an intake port 22 for introducing air into the housing 21 to cool the battery modules.

An opening 13 is formed in the floor panel 11 and is connected with the intake duct 30. Also, mounting brackets 15 are welded to the floor panel 11, and the intake duct cover 40 is fastened to the mounting brackets 15. Nuts 16 are welded to those surfaces of the respective mounting brackets 15 which face the floor panel 11. A bellows-like connecting member 14 made of rubber is fitted into the opening 13 of the floor panel 11 and is connected to the intake port 22 of the battery pack 20 while the battery pack 20 is mounted on the vehicle, so as to absorb misalignment between the opening 13 of the floor panel 11 and the intake port 22 of the battery pack 20.

As seen from FIGS. 3 to 5, the intake duct cover 40 is constituted by an intake duct fixing section 41 and a bracket section 42.

The intake duct fixing section 41 is made of a thin metal plate and is generally in the form of a half-cut bowl extending along the contours of a portion of the intake duct 30 where the intake duct fixing section 41 is disposed in contact with the intake duct 30, so that load may not be applied locally to the intake duct 30. The intake duct fixing section 41 and the intake duct 30 constitute a closure member for closing the intake port 22. The bracket section 42 serves as a fixing member for fixing the closure member.

The bracket section 42 is made of a thin metal plate and has a hat-like sectional shape as viewed from above, as shown in FIG. 3, such that when the intake duct fixing section 41 is secured to the bracket section 42, spaces 43 are defined between the intake duct fixing section 41 and the bracket section 42. The bracket section 42 has a bolt inserting portion 44 (mounting portion) formed at each of opposite ends thereof by making a generally V-shaped cut in the corresponding end of the bracket section 42. Also, a recessed portion 46 of the bracket section 42, which corresponds to the crown of the hat-like sectional shape, extends downward toward the front of the vehicle, as shown in FIG. 4. Further, as seen from FIG. 5, the front edge of the recessed portion 46 corresponding to the crown of the hat-like sectional shape is continuous with the end of the bracket section 42 where the bolt inserting portion 44 is formed.

The intake duct fixing section 41 and the bracket section 42 configured in this manner are joined together by welding such that the space 43 is provided between the intake duct fixing section 41 and each side wall 45 of the bracket section 45.

As shown in FIG. 4, the battery pack 20 is arranged under the floor panel 11 of the vehicle body 10 such that the intake port 22 of the battery pack 20 communicates with the interior of the connecting member 14 fitted into the opening 13 of the floor panel 11. Also, the intake duct 30 is fixed, with use of the intake duct cover 40, to the floor panel 11 by the bolts 50 which are inserted into the respective bolt inserting portions 44 of the bracket section 42 of the intake duct cover 40 and screwed into the respective nuts 16 of the mounting brackets 15, so that the intake duct 30 may communicate with the interior of the connecting member 14.

The following describes the operation and advantageous effects of the pouring structure of the present invention configured as described above.

The bolt inserting portions 44 of the intake duct cover 40 are formed by making generally V-shaped cuts in the respective ends of the bracket section 42. The bolts 50 are inserted into the respective bolt inserting portions 44 of the intake duct cover 40 and screwed into the respective nuts 16 of the mounting brackets 15, to fix the intake duct 30 to the floor panel 11 with use of the intake duct cover 40.

Each bolt inserting portion 44 is constituted by a generally V-shaped cut which is partly open, and therefore, in case the vehicle 1 is put in an emergency situation, the intake duct cover 40 can be detached from the floor panel 11 by deforming the intake duct cover 40 and thereby pulling out the bolt inserting portions 44 from the bolts 50 screwed into the respective nuts 16 of the mounting brackets 15. Then, water or fire extinguishing agent is poured into the battery pack 20 through the intake port 22.

The intake duct cover 40 can be detached without the need to use a tool or the like, and accordingly, in case of emergency, water or fire extinguishing agent can be readily poured into the battery pack 20.

The intake port 22 of the battery back 20 is also used as an inlet port for water or fire extinguishing agent. Accordingly, it is unnecessary to additionally form a separate inlet port for water or fire extinguishing agent or to provide a separate closure member for closing the inlet port, whereby increase in cost can be restrained.

Further, the intake duct fixing section 41 and the bracket section 42 are joined together by welding such that the space 43 is provided between the intake duct fixing section 41 and each side wall 45 of the bracket section 42.

The spaces between the bracket section 42 and the intake duct 30 allow the bracket section 42 to be deformed therein, whereby the intake duct cover 40 can be detached from the floor panel 11 more easily.

Although the embodiment of the present invention has been described above, it is to be noted that the present invention is not limited to the foregoing embodiment alone.

For example, in the above embodiment, the bolt inserting portions 44 are formed by making generally V-shaped cuts in the respective opposite ends of the bracket section 42. Alternatively, a generally V-shaped cut as the bolt inserting portion 44 may be formed in only one of the two opposite ends of the bracket section 42. Also in this case, the bolt inserting portion 44 formed at one end of the bracket section 42 can be pulled out from the corresponding bolt 50 by deforming the bracket section 42. The intake port 22 can therefore be readily exposed by detaching the intake duct cover 40 at one side from the floor panel 11, making it possible to pour water or fire extinguishing agent.

Also, in the above embodiment, the connecting member 14 is used to connect the intake port 22 of the battery pack 20 and the opening 13 of the floor panel 11 with each other, and the intake duct cover 40 is fixed to the floor panel 11 by tightening the bolts 50 and the nuts 16. Alternatively, the intake port 22 of the battery pack 20 may be directly covered with the intake duct cover 40, for example, without using the connecting member 14, and the intake duct cover 40 may be fixed to the battery pack 20.

Further, in the above embodiment, the intake duct cover 40 is fixed to the floor panel 11 with use of the brackets 15 welded to the floor panel 11. As an alternative, for example, nuts may be welded to the rear surface of the floor panel 11, and the intake duct cover 40 may be directly fixed to the floor panel 11 by inserting the bolts 50 into the respective bolt inserting portions 44 of the intake duct cover 40 and screwing the bolts 50 into the respective nuts.

In the foregoing embodiment, moreover, the spaces 43 are provided between the intake duct fixing section 41 and the bracket section 42 of the intake duct cover 40. Alternatively, space may be formed between the intake duct 30 and the intake duct fixing section 41 after the intake duct cover 40 is attached to the floor panel 11. It is only necessary that the intake duct cover 40 be able to be readily deformed by the provision of space between the intake duct 30 and the intake duct cover 40.

Further, in the foregoing, the intake port 22 of the battery pack 20 is used as the inlet port as well. The battery pack 20 may of course be provided with a separate inlet port used exclusively for the pouring of water or fire extinguishing agent. Also in this case, the bolt inserting portions are each so formed as to be partly open in order that the closure member closing the inlet port can be pulled out from the bolts by which the closure member is fastened, whereby the closure member can be readily detached without the need to use a tool or the like.

## Claims

1. A pouring structure for a battery pack, **characterized by** comprising:
an inlet port (22) provided in a battery pack (20) which supplies electric power to an electric motor for driving an electric vehicle (1), the inlet port allowing water or fire extinguishing agent to be poured into the battery pack;
a closure member (30, 41) closing the inlet port; and
a bracket (42) configured to cover and fix the closure member and having a mounting portion (44) formed so as to be partly open,
wherein the closure member is securely connected to the inlet port with use of the bracket by inserting a fastening member (50) into the mounting portion and fastening the bracket to either a vehicle body (10) or the battery pack,
the inlet port is an intake port (22) through which air is introduced into the battery pack (20),
the closure member is constituted by an intake duct (30) connecting the intake port and an interior of a vehicle compartment with each other, and a duct fixing member (41) securely connecting the intake duct to the intake port, and
the bracket is configured such that a space (43) is provided between the duct fixing member (41) and each side wall (45) of the bracket (42).

2. The pouring structure according to claim 1, **characterized in that** the mounting portion (44) of the bracket (42) is formed at each of opposite ends of the bracket.

## Patentansprüche

1. Gießstruktur für einen Batteriepack, **dadurch gekennzeichnet, dass** sie aufweist:
eine Einlassöffnung (22), die in einem Batteriepack (20) vorgesehen ist, der elektrischen Strom an einen Elektromotor zum Antreiben eines Elektrofahrzeugs (1) liefert, wobei die Einlassöffnung es ermöglicht, dass Wasser oder ein Feuerlöschmittel in den Batteriepack gegossen wird;
ein Verschlusselement (30, 41), das die Einlassöffnung verschließt; und
eine Halterung (42), die konfiguriert ist, das Verschlusselement zu bedecken und es zu befestigen und die einen Montageabschnitt (44) aufweist, der so ausgebildet ist, dass er teilweise offen ist,
wobei das Verschlusselement mittels der Halterung durch Einsetzen eines Befestigungselements (50) in den Montageabschnitt und Befestigen der Halterung entweder an einer Fahrzeugkarosserie (10) oder am Batteriepack sicher mit der Einlassöffnung verbunden ist,
die Einlassöffnung eine Zufuhröffnung (22) ist, durch die Luft in den Batteriepack (20) eingeleitet wird,
das Verschlusselement durch einen Zufuhrkanal (30) gebildet wird, der die Zufuhröffnung und ein Inneres einer Fahrzeugzelle miteinander verbindet, und wobei ein Kanalbefestigungselement (41) den Zufuhrkanal sicher mit der Zufuhröffnung verbindet, und
die Halterung so konfiguriert ist, dass ein Raum (43) zwischen dem Kanalbefestigungselement (41) und jeder Seitenwand (45) der Halterung (42) vorgesehen ist.

2. Gießstruktur nach Anspruch 1, **dadurch gekennzeichnet, dass** der Montageabschnitt (44) der Halterung (42) an jedem von gegenüberliegenden Enden der Halterung ausgebildet ist.

## Revendications

1. Structure de versement pour bloc-batterie, **caractérisée en ce qu'**elle comprend :
un orifice d'entrée (22) prévu dans un bloc-batterie (20) alimentant en courant électrique un moteur électrique pour l'entraînement d'un véhicule électrique (1), ledit orifice d'entrée permettant de verser de l'eau ou un agent extincteur dans le bloc-batterie ;
un élément de fermeture (30, 41) obturant l'orifice d'entrée ; et
un support (42) prévu pour recouvrir et fixer l'élément de fermeture et présentant une partie de montage (44) formée de manière à être partiellement ouverte,
l'élément de fermeture étant raccordé par fixation à l'orifice d'entrée au moyen du support par insertion d'un élément de fixation (50) dans la partie de montage et fixation du support soit contre la caisse du véhicule (10) soit contre le bloc-batterie,
l'orifice d'entrée étant un orifice d'admission (22) par lequel de l'air est introduit dans le bloc-batterie (20),
l'élément de fermeture étant constitué d'un conduit d'admission (30) reliant l'orifice d'admission à l'intérieur de l'habitacle du véhicule, et d'un élément de fixation de conduit (41) raccordant par fixation le conduit d'admission à l'orifice d'admission, et
le support étant prévu de manière à former un espace (43) entre l'élément de fixation de conduit (41) et chaque paroi latérale (45) du support (42).

2. Structure de versement selon la revendication 1, **caractérisée en ce que** la partie de montage (44) du support (42) est formée à chacune des extrémités opposées du support.
